# EUROPEAN PATENT APPLICATION

(11) **EP 2 725 479 A2**
(43) Date of publication of application: **30.04.2014**
(21) Application number: 13169999.3
(22) Date of filing: 31.05.2013
(51) Int. Cl.: G06F 3/12

(54) **Image forming apparatus and image forming method**

(30) Priority: 29.10.2012 KR 20120120698
(71) Applicant: Samsung Electronics Co., Ltd, Gyeonggi-do 443-742 (KR)
(72) Inventor: Kim, Kyun-yong, Gyeonggi-do (KR); Lee, Hye-jin, Gyeonggi-do (KR)
(74) Representative: Walaski, Jan Filip

(57) **Abstract**

An image forming apparatus and an image forming method are provided. The image forming apparatus includes: a communication interface which receives printing data; a storage which stores a plurality of symbol set tables; a searcher which, if the printing data is a text document, searches for a symbol set table to be applied to the text document among the plurality of symbol set tables stored in the storage; a user interface (UI) which displays a preview image of the searched symbol set table and receives a selection of whether the searched symbol set table is to be applied; and an image former which performs a print job with respect to the text document by using the selected symbol set table.

## Description

The present invention relates to an image forming apparatus and an image forming method, and more particularly, to an image forming apparatus and an image forming method for printing a general text document by using an appropriate symbol set table.

An image forming apparatus is an apparatus which generates, prints, transmits, etc. image data. Examples of the image forming apparatus include a printer, a scanner, a copier, a fax machine, and a multifunction peripheral (MFP) having combined functions thereof.

Recent image forming apparatus supports direct printing to receive a file directly from an external apparatus and print the file or to print a document stored in a universal serial bus (USB) storage device. In this case, if a text document (a document having extension TXT), a conventional image forming apparatus performs a printing job by using a symbol set table set in an output device.

Here, the symbol set table is a set of printable characters. A character is obtained from the symbol set table by using a 1-byte character code value obtained by parsing a text document through a printer control language (PCL) parser.

If a character used in the text document is written in German or Greek and is to be properly output, a user directly selects the symbol set table corresponding to the character to perform a printing job in the conventional image forming apparatus. However, a general user does not know a concept of the symbol set table and is difficult to check which one of the symbol set table is to be set.

Exemplary embodiments address at least the above problems and/or disadvantages and other disadvantages not described above. Also, the exemplary embodiments are not required to overcome the disadvantages described above, and an exemplary embodiment may not overcome any of the problems described above.

The exemplary embodiments provide an image forming apparatus and an image forming method for printing a general text document by using an appropriate symbol set table.

According to an aspect, there is provided an image forming apparatus comprising: a communication interface which receives printing data; a storage which stores a plurality of symbol set tables; a searcher which, if the printing data is a text document, searches for a symbol set table to be applied to the text document among the plurality of symbol set tables stored in the storage; a user interface (UI) which displays a preview image of the searched symbol set table and receives a selection of whether the searched symbol set table is to be applied; and an image former which performs a print job with respect to the text document by using the selected symbol set table.

The image forming apparatus may further include a determiner which determines whether the input printing data is the text document.

The determiner may determine whether the printing data is the text document, according to whether the printing data includes a page description language (PDL) command.

The text document may be a document file having extension TXT.

The searcher may search the symbol set table to be applied to the text document, based on national information set in the image forming apparatus.

If a plurality of symbol set tables based on the national information are searched, the searcher may determine priorities of the plurality of symbol set tables based on a distribution range of a code of the text document.

The searcher may search the symbol set table to be applied to the text document, based on the distribution range of the code of the text document.

The searcher may search a symbol set table recently used in the image forming apparatus.

The searcher may search a plurality of symbol set tables. The UI may display preview images of the plurality of symbol set tables.

According to an aspect, there is provided an image forming apparatus comprising: a communication interface which receives printing data; a storage which stores a plurality of symbol set tables; a UI which, if the printing data is a text document, displays a preview image of the text document to which a preset symbol set table is applied and receives a selection of whether the preset symbol set table is to be applied; a searcher which, if the preset symbol set table is not selected, searches a symbol set table to be applied to the text document among the plurality of symbol set tables stored in the storage; a controller which controls the UI to display a preview image of the searched symbol set table and receive the selection of whether the searched symbol set table is to be applied; and an image former which performs a print job with respect to the text document by using the selected symbol set table.

According to an aspect, there is provided an image forming method of an image forming apparatus comprising: receiving printing data; if the printing data is a text document, searching for a symbol set table to be applied to the text document among a plurality of pre-stored symbol set tables; displaying a preview image of the searched symbol set table; receiving a selection of whether the searched symbol set table is to be applied; and performing a print job with respect to the text document by using the selected symbol set table.

The image forming method may further include: determining whether the printing data is the text document.

Whether the printing data is the text document may be determined according to whether the printing data comprises a PDL command.

The text document may be a document file having extension TXT.

The symbol set table to be applied to the text document may be searched based on national information set in the image forming apparatus.

If a plurality of symbol set tables based on the national information are searched, priorities of the plurality of symbol set tables may be determined based on a distribution range of a code of the text document.

The symbol set table to be applied to the text document may be searched based on the distribution range of the code of the text document.

A symbol set table recently used in the image forming apparatus may be searched.

A plurality of symbol set tables may be searched. Preview images of the plurality of symbol set tables may be displayed.

According to an aspect, there is provided an image forming method of an image forming apparatus comprising: receiving printing data; if the printing data is a text document, displaying a preview image of the text document to which a preset symbol set table is applied; receiving a selection of whether the preset symbol set table is to be applied; if the preset symbol set table is not selected, searching a symbol set table to be applied to the text document among a plurality of pre-stored symbol set tables; displaying a preview image of the searched symbol set table; receiving a selection of whether the searched symbol set table is to be applied; and performing a print job with respect to the text document by using the selected symbol set table.

According to an aspect, there is provided a non-transitory computer readable recording medium including a program for executing the image forming method.

The above and/or other aspects will be more apparent by describing certain exemplary embodiments with reference to the accompanying drawings, in which:
FIG. 1 is a block diagram of an image forming apparatus according to an embodiment;
FIG. 2 is a view illustrating a method of mapping a symbol set table;
FIGS. 3 and 4 are views illustrating an operation of a determiner of FIG. 1;
FIG. 5 is a view illustrating priorities of a symbol set table displayed on a user interface (UI);
FIG. 6 is a view illustrating a symbol set supportable based on national information according to an embodiment;
FIG. 7 is a view illustrating a data area commonly used in a symbol set;
FIG. 8 is a view illustrating a position of a commonly used data area;
FIG. 9 is a view illustrating a UI window displayable on a UI of FIG. 1, according to an embodiment;
FIG. 10 is a flowchart illustrating an image forming method according to an embodiment;
FIG. 11 is a flowchart illustrating a searching operation of FIG. 10 in detail;
FIG. 12 is a flowchart illustrating a second priority determining operation of FIG. 11 in detail;
FIG. 13 is a flowchart illustrating a display operation of FIG. 10 in detail; and
FIG. 14 is a flowchart illustrating an image forming method according to an embodiment.

Exemplary embodiments are described in greater detail with reference to the accompanying drawings.

In the following description, the same drawing reference numerals are used for the same elements even in different drawings. The matters defined in the description, such as detailed construction and elements, are provided to assist in a comprehensive understanding of the exemplary embodiments. Thus, it is apparent that the exemplary embodiments can be carried out without those specifically defined matters. Also, well-known functions or constructions are not described in detail since they would obscure the exemplary embodiments with unnecessary detail.

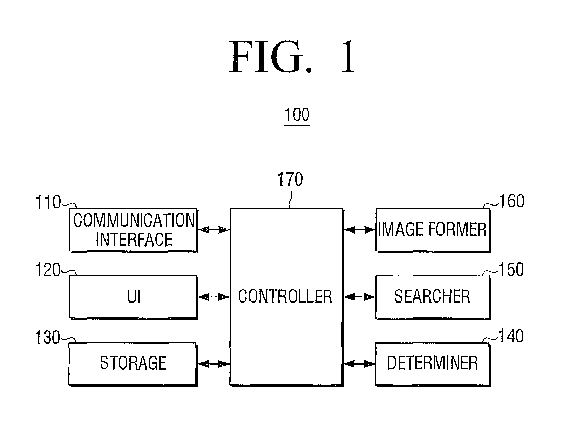

FIG. 1 is a block diagram of an image forming apparatus 100 according to an embodiment.

Referring to FIG. 1, the image forming apparatus 100 includes a communication interface 110, a user interface (UI) 120, a storage 130, a determiner 140, a searcher 150, an image former 160, and a controller 170.

Here, the image forming apparatus 100 may be a copier, a printer, a fax machine, or a multifunction peripheral (MFP) which complexly realizes functions thereof through one device.

The communication interface 110 is formed to connect the image forming apparatus 100 to an external apparatus through a local area network (LAN), the Internet, through a universal serial bus (USB) port or a wireless module. Here, the external apparatus may be a print controlling apparatus, for example, such as a personal computer (PC) or a mobile device.

The communication interface 110 receives printing data. The printing data may be data of a printer language such as a postscript (PS), a printer control language (PCL), or the like. If the image forming apparatus 100 supports direct printing, the printing data may be a file such as PDF, XPS, BMP, JPG, a text document, or the like. Here, the text document may be a document file having extension TXT.

The UI 120 includes a plurality of functional keys through which a user sets or selects various types of functions supported by the image forming apparatus 100. The UI 120 also displays various types of information provided by the image forming apparatus 100. The UI 120 may be realized as a device which simultaneously realizes an input and an output like a touch screen or as a device into which a mouse and a monitor are integrated.

The UI 120 receives a job performing command. In detail, if a storage medium such as a USB is connected to the image forming apparatus 100, the UI 120 may display a list of various types of documents stored in the USB. The UI 120 may also select one of the various types of documents as an object to be printed and receive a print job command with respect to the selected document from the user.

If a symbol set table is applied, the UI 120 displays a view image. In detail, if a symbol set table searched by the searcher 150 which will be described later or a preset symbol set table is applied to print the selected text document, the UI 120 may display a displayable view image. Here, the symbol set table is a set of printable characters. A PCL parser obtains an appropriate character from the symbol set table by using a 1-byte character code value obtained by parsing a text document.

If the searcher 150 searches for a plurality of symbol set tables, the UI 120 may display preview images of the plurality of symbol set tables. If priorities of the plurality of symbol set tables are determined, the UI 120 may sequentially display preview images of the plurality of symbol set tables according to the determined priorities. The UI 120 may display a preview image of a whole area of a text document or a preview image of an area of the text document.

The UI 120 receives a selection of a symbol set table to be applied. In detail, the UI 120 may receive a selection of whether a print job is to be performed by using a symbol set table corresponding to a displayed preview image, from a user. As described above, the selected symbol set table may be set to a preset symbol set table (or a default symbol set table).

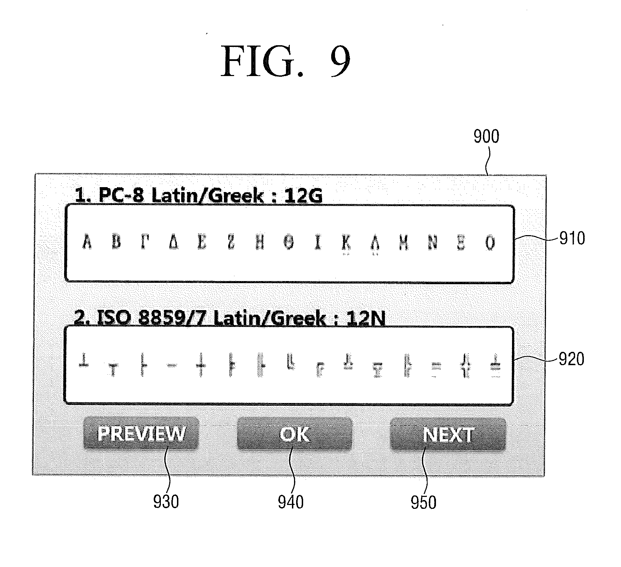

If a plurality of preview images are displayed, the UI 120 may receive a selection of one of the plurality of preview images from the user. In this case, a symbol set table corresponding to the selected preview image may be used as a preview image for performing a print job. An example of a UI window displayable on the UI 120 will be described later with reference to FIG. 9.

The storage 130 stores various types of files. The storage 130 may also store the printing data received through the communication interface 110. The storage 130 stores a plurality of pieces of symbol set data used for printing the text document.

The storage 130 may be realized as an internal storage medium of the image forming apparatus 100 or an external storage medium, e.g., a removable disk including a USB memory, a web server through a network, or the like.

The determiner 140 determines whether the input printing data is a text document. In detail, the determiner 140 may determine whether the printing data received through the communication interface 110 is the text document, according to whether the printing data includes a page description language (PDL) command. For example, if the received printing data includes the PLD command, the determiner 140 may determine that the received printing data is not the text document. If the received printing data does not include the PDL command, the determiner 140 may determine that the received printing data is the text document.

The searcher 150 searches for one of the plurality of symbol set tables to be applied to the text document. In detail, if the received printing data is the text document, the searcher 150 may search for a symbol set table to be applied to the text document received through the communication interface 110, among the plurality of symbol set tables stored in the storage 130.

In more detail, the searcher 150 may search for a symbol set table to be applied to the text document, based on national information set in the image forming apparatus 100. The searcher 150 may search for the symbol set table to be applied to the text document, based on a distribution range of a code of the text document. The searcher 150 may search for a recently used symbol set table.

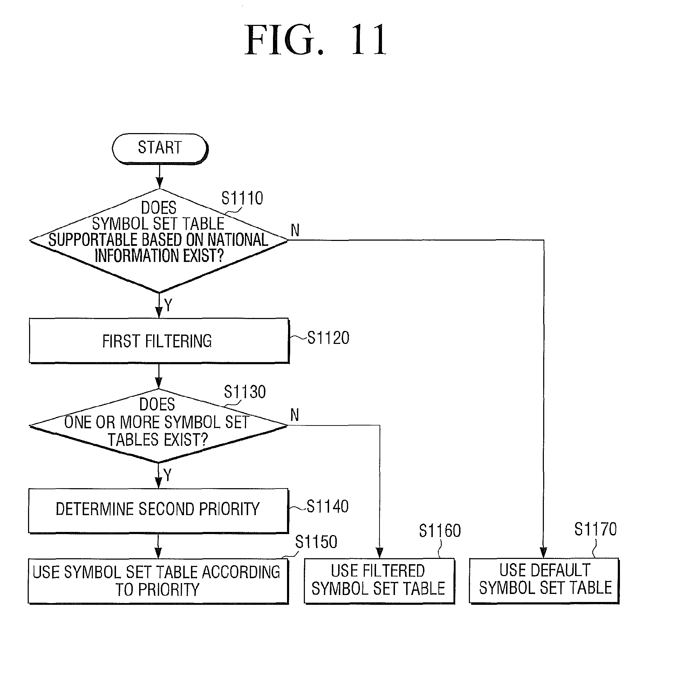

As described above, the searcher 150 may search for a symbol set table based on various types of conditions. Searching processes as described above may be performed in parallel or sequentially. An operation of this case will be described later with reference to FIG. 11.

The image former 160 outputs the printing data. In detail, if the printing data, such as a PS or a PCL, is input, the image former 160 may perform a printing job through operations such as parsing and rendering with respect to the input printing data. If the text document is input, the image former 160 may perform a printing job with respect to the text document by using a symbol set table selected by the user. In detail, the image former 160 includes the PCL parser, searches the symbol set table corresponding to each byte value of the text document for a character by using the PCL parser, and performs a printing job with respect to the searched character.

The controller 170 controls elements of the image forming apparatus 100. In detail, if the printing data is received through the communication interface 110, the controller 170 controls the determiner 140 to determine whether the received printing data is the text document. If it is determined that the received printing data is the text document, the controller 170 controls the searcher 150 to search for a symbol set table to be applied to the text document.

The controller 170 also controls the UI 120 to display a preview image of the searched symbol set table and receives a selection of whether the symbol set table is to be applied. If the symbol set table is selected by the user, the controller 170 controls the image former 160 to perform a printing job based on the selected symbol set table.

As described above, the image forming apparatus 100 according to the present exemplary embodiment searches for a symbol set table appropriate for an input text document and provides a preview image of the searched symbol set table to the user. Therefore, the image forming apparatus 100 prevents a wrong character from being output.

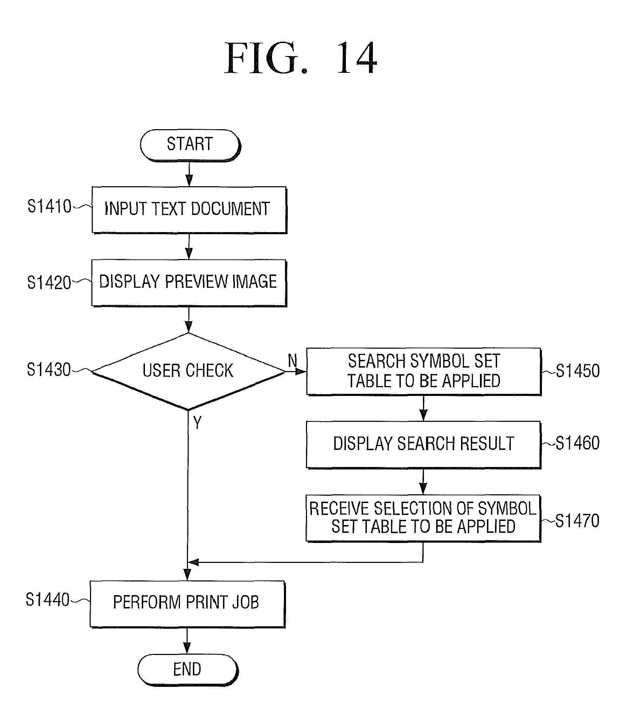

In the above description, if a text document is input, a symbol set table to be applied to the text document is first searched. However, a preview image of a preset symbol set table (preset in an image forming apparatus) may be first displayed. If the preset symbol set table is not appropriate, an operation as described above may be performed. This example will be described later with reference to FIG. 14.

The determiner 140, the searcher 150, and the controller 170 are separate elements in the above description and illustration. However, functions of the determiner 140, the searcher 150, and the controller 170 may be performed by one element.

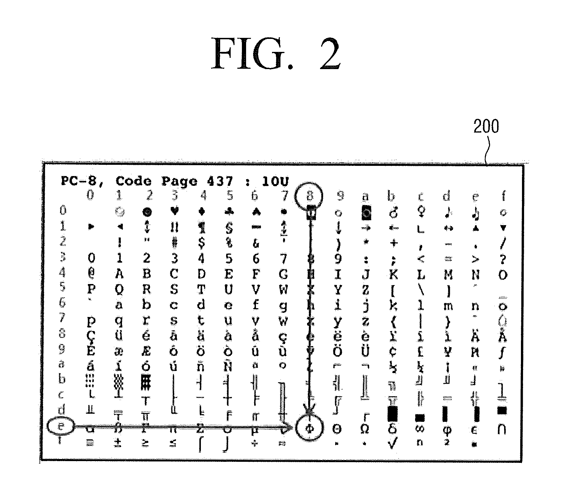

FIG. 2 is a view illustrating a method of mapping a symbol set table.

Referring to FIG. 2, a symbol set table in "PC-8, code page 437 :10U" is shown. Here, the symbol set table is a set of printable characters.

If parsed 1 byte of a text document is 0XE8, and a set symbol set table is "PC-8, code page 737:10U," the image forming apparatus 100 prints character Φ matching with 0XE8 as shown in FIG. 2.

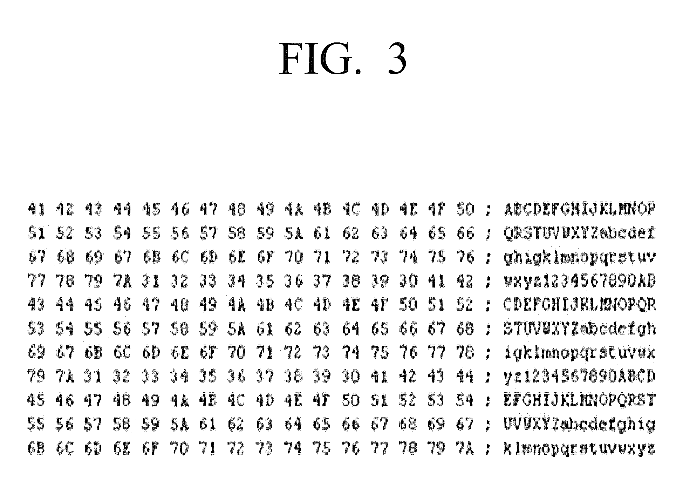

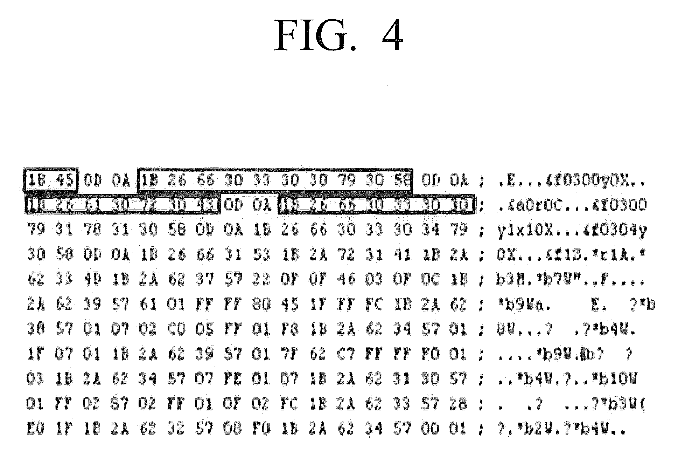

FIGS. 3 and 4 are views illustrating an operation of the determiner 140 of FIG. 1. In detail, FIG. 3 is a view illustrating a hexadecimal value of a text document, and FIG. 4 is a view illustrating a hexadecimal value of a PDL document.

Referring to FIGS. 3 and 4, the PDL document includes consecutive commands, and the text document includes only data values without commands.

Therefore, the determiner 140 may determine whether input printing data is a text document according to whether the input printing data includes a PDL command.

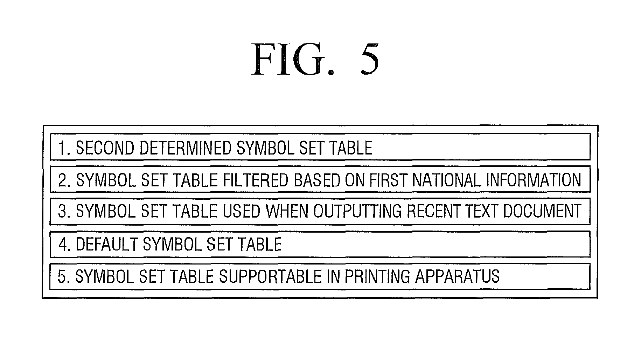

FIG. 5 is a view illustrating priorities of symbol set tables displayed on a UI.

Referring to FIG. 5, preview images of a second selected symbol set table, a symbol set table filtered based on national information, a symbol set table used when outputting a recent text document, a preset symbol set table, and a symbol set table supportable in a printing apparatus are sequentially displayed.

In detail, the UI 120 displays a preview image of a top priority symbol set table (the second determined symbol set table). Here, the second determined symbol set table is a symbol set table which is filtered based on a distribution range of a code of a text document among the symbol set table filtered based on the national information.

If a selection of a user that the preview image of the top priority symbol set table is not appropriate is input, the UI 120 displays a preview image of a second priority symbol set table (the symbol set table filtered based on the national information).

As described above, in the present exemplary embodiment, whether symbol set tables are to be applied may be checked by a user in order of highly selectable symbol set tables. Whether symbol set tables are to be applied may be checked according to priorities different from those of FIG. 5.

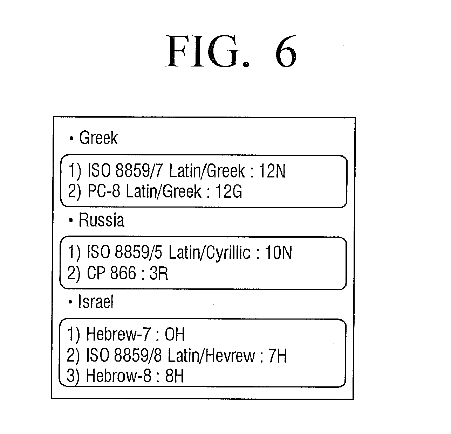

Hereinafter, an operation of searching for one of a plurality of symbol set tables to be applied and an operation of applying priorities as described above to the searched symbol set tables will be described with reference to FIGS. 6 through 8.

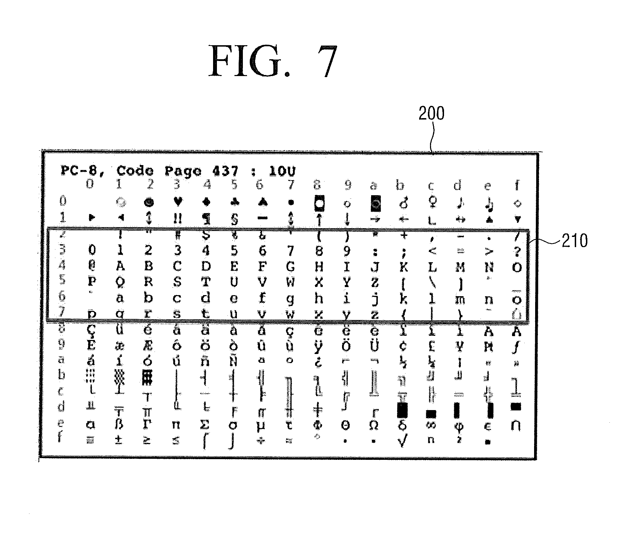

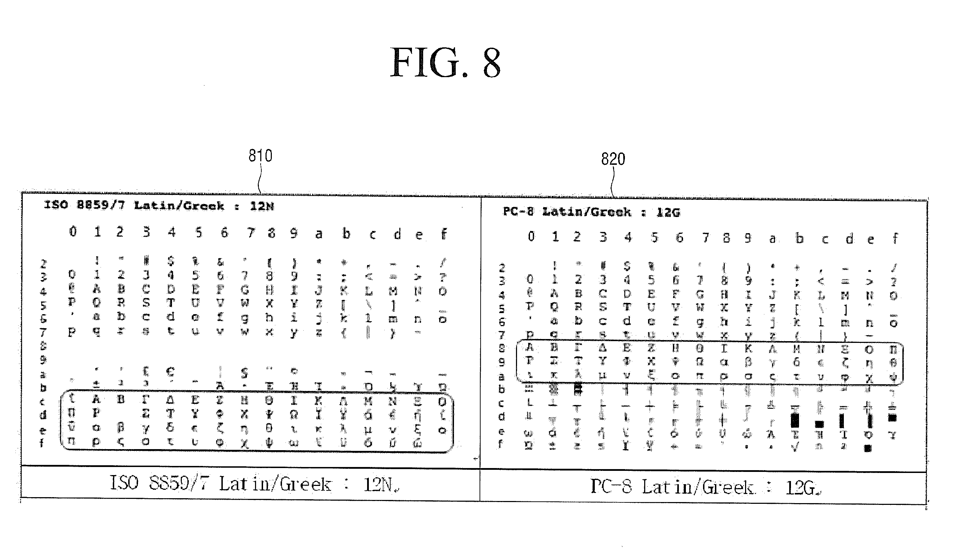

The searcher 150 according to an embodiment performs 2 step searches. The searcher 150 may perform the first step search based on national information. If the plurality of symbol set tables are searched, the searcher 150 may perform the second step search through parsing of input data. Hereinafter, an operation of the first step search will be described with reference to FIG. 6, and an operation of the second step search will be described with reference to FIGS. 7 and 8.

FIG. 6 is a view illustrating a symbol set table supportable based on national information according to an embodiment.

The symbol set table is a set of printable characters as described above and is generally grouped according to kinds of languages. Also, There is a strong possibility that one nation will use a native language or a first foreign language. The searcher 150 according to an embodiment may search one of a plurality of symbol set tables to be applied, based on national information.

For example, if national information of the image forming apparatus 100 is set to Greek as shown in FIG. 6, an input text document may be a text document using a symbol set table related to Greek.

Therefore, the searcher 150 may select "ISO 8857/7 Latin/Greek :12N", "PC-8 Latin/Greek :12G" related to Greek by using symbol set table information (which may be stored in a storage) of each national information.

If a plurality of symbol set tables are searched through a first search as described above, a second search is performed. If one symbol set table is searched in the first search, the additional second search may not be performed. A second search operation performed if a plurality of symbol set tables are searched will now be described with reference to FIGS. 7 and 8.

FIG. 7 is a view illustrating a data area commonly used in a symbol set table.

One language may support several symbol set tables. If symbol set tables supporting a corresponding language do not accurately match with each other, a character that a user does not want may be output. Therefore, a data range of input data is parsed to determine priorities of a plurality of symbol set tables.

The input data (a text document) is parsed in the unit of bytes to count the number of times using each of the input data, and the number of times are arranged after the parsing of the input data is completed. Through this, which range the input data is more distributed, and priorities may be determined based on this.

Referring to FIG. 7, 0X20∼0X7F 210 is a part on a symbol set table 200. If a language character is supported besides an alphabet, the language character is defined in a range except 0X20∼0X7F 210. Therefore, the searcher 150 may ignore data of 0X20 ∼0X7F 210 of the arranged data and use other pieces of information. For example, if national information of the image forming apparatus 100 is Greek, a symbol set table supporting Greek is equal to "ISO 8859/7 Latin/Greek:12N" 810 and "PC-8 Latin/Greek:12G" 820. The two symbol set tables are shown in FIG. 8.

Referring to FIG. 8, a position including Greek is checked. The symbol set table "ISO 8859/7 Latin/Greek:12N" 810 matches data of 0XC1∼0XFB to generate a character, and the symbol set table "PC-8 Latin/Greek:12G" 820 maps Greek when data of 0X80∼0XAF is input. If previously parsed frequency data of an upper rank is more distributed in0XC1∼0XFE, corresponding document data may be written by using "ISO 8859/7 Latin/Greek: 12N" 810. Therefore, a priority of "ISO 8859/7 Latin/Greek: 12N" 810 may be determined to be higher than "PC-8 Latin/Greek:12G" 820.

If the frequency data of the upper rank is formed of only 0X20∼0X7F, priorities of two symbol set table may be the same.

If there is no symbol set table supportable based on national information in a first search process, a default symbol set table (a preset symbol set table may be used.

FIG. 9 is a view illustrating a UI window displayable on a UI of FIG. 1, according to an embodiment.

Referring to FIG. 9, a UI window 900 includes areas 910 and 920 displaying preview images of searched symbol set tables, a first area 930, a second area 940, and a third area 950.

The areas 910 and 920 display preview images of symbol set table of the searched symbol set tables having high priorities. In the embodiment, a preview image of a part of data is displayed, but a preview image of a whole part of the data may be displayed. In the embodiment, for example, preview images of two symbol set tables are displayed. However, for example, one or more preview images of a symbol set may be displayed.

The first area 930 receives a command which is to display a whole preview image. If the first area 930 is selected, a whole preview image of one of the two symbol set tables may be displayed.

The second area 940 receives a selection command. In detail, the second area 940 receives a user command which is to use symbol set tables which are used for displaying appropriate preview images displayed in the areas 910 and 920.

The third area 950 receives a command which is to display a preview image of another symbol set table. In detail, the third area 950 receives a user command which is to display another preview image since preview images displayed in the areas 910 and 920 are not appropriate.

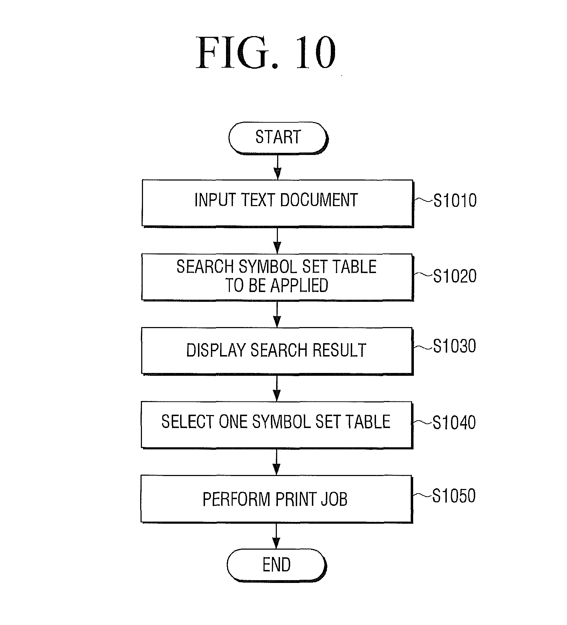

FIG. 10 is a flowchart illustrating an image forming method according to an embodiment.

Referring to FIG. 10, in operation S1010, a text document is input. An operation of determining whether input printing data is a text document may be first added.

In operation S1020, one of a plurality of pre-stored symbol set tables to be applied to the text document is searched. A detailed operation of the searching will be described with reference to FIG. 11.

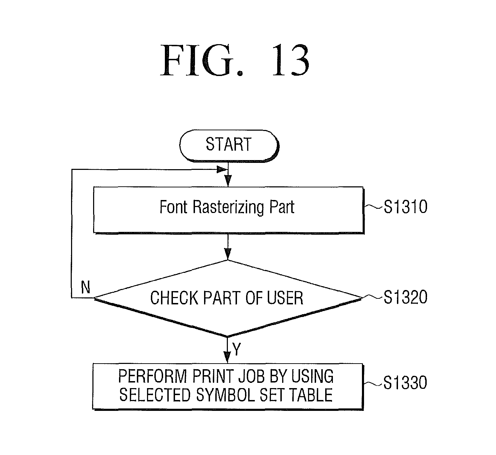

In operation S1030, a preview image of the searched symbol set table is displayed. A detailed operation of the displaying will be described later with reference to FIG. 13.

In operation S1040, a selection of whether the searched symbol set table is to be applied is received. In detail, if the displayed preview image expresses an appropriate character, a user may select the displayed preview image and select a symbol set table corresponding to the selected preview image as a symbol set table to be used in a print job.

In operation S1050, a printing job is performed with respect to the text document by using the selected symbol set table. In detail, a character of the selected symbol set table corresponding to each byte value of the text document may be searched, and a print job may be performed with respect to the searched character.

As described above, in the image forming method according to the present exemplary embodiment, an appropriate symbol set table of an input text document is searched. A preview image of the searched symbol set table is provided to a user. Therefore, a wrong character may be prevented from being output from an image forming apparatus. The image forming method of FIG. 10 may be performed by an image forming apparatus having a structure as described with reference to FIG. 1 or image forming apparatuses having other types of structures.

Also, the above-described image forming method may be realized as a program including a computer executable algorithm. The program may be stored and provided on a non-transitory computer readable medium.

The non-transitory computer readable medium refers to a medium which does not store data for a short time such as a register, a cache memory, a memory, or the like but semi-permanently stores data and is readable by a device. In detail, the above-described applications or programs may be stored and provided on a non-transitory computer readable medium such as a CD, a DVD, a hard disk, a blue-ray disk, a universal serial bus (USB), a memory card, a ROM, or the like.

FIG. 11 is a flowchart illustrating the searching operation of FIG. 10 in detail.

Referring to FIG. 11, in operation S1110, a determination is made as to whether a symbol set table supportable based on national information exists. In detail, a determination may be made as to whether a symbol set table based on national information installed in an image forming apparatus exists.

If it is determined in operation S1110 that the supportable symbol set table does not exist, a preset symbol set table is output as a search result in operation S1170. A symbol set table recently used by the image forming apparatus may be output as the search result.

If it is determined in operation S1110 that the supportable symbol set table exists, a first search is performed with respect to a plurality of symbol set tables by using the national information in operation S1120.

If one symbol set table is searched as the result of the first search in operation S1130, the searched symbol set table is output as the search result in operation S1160.

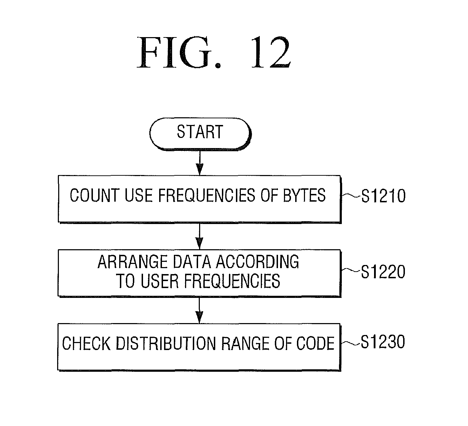

If the plurality of symbol set tables are searched in operation S1130, priorities of the plurality of symbol set tables are determined in operation S1140. The operation of determining the priorities will be described with reference to FIG. 12.

FIG. 12 is a flowchart illustrating the operation of determining the priorities described with reference to FIG. 11 in detail.

Referring to FIG. 12, in operation S1210, use frequencies of bytes of a plurality of symbol set tables are counted. In detail, data of an input text document is parsed in the unit of bytes to count the number of times using each piece of the data.

In operation S1220, the data is arranged according to the use frequencies of the plurality of symbol set tables. In detail, each piece of the data may be arranged according to the counted number of times.

In operation S1230, a distribution range of a code is checked. In detail, the distribution range of the code of the text document may be checked based on the parsing result of the input data, and priorities of the plurality of symbol set tables may be determined according to the checked distribution range of the code.

FIG. 13 is a flowchart illustrating the display operation of FIG. 10 in detail.

Referring to FIG. 13, in operation S1310, rasterizing is performed. In detail, rasterizing may be performed to provide a user of a preview image of a selected symbol set table (in detail, a symbol set table having a first priority). Also, rasterized symbols are displayed.

In operation S1320, a check for whether the displayed symbols are appropriate is received from the user. In detail, if a currently displayed symbol is appropriate, a symbol set table corresponding to the currently displayed symbol is used for a print job in operation S1330. If the current displayed symbol is not appropriate, a preview image of a symbol set table having a next priority may be displayed.

FIG. 14 is a flowchart illustrating an image forming method according to an embodiment.

Referring to FIG. 14, in operation S1410, a text document is input.

In operation S1420, a preview image of the text document to which a preset symbol set table is applied is displayed.

In operation S1430, a selection of whether a preset symbol set table is to be applied is received. In detail, if the displayed preview image is appropriate, and thus using of the corresponding symbol set table is selected in operation S1430, a print job is performed by using the preset symbol set table.

If the preset symbol set table is not appropriate in operation S1430, one of a plurality of pre-stored symbol set tables to be applied to the text document is searched in operation S1450. This searching process may be performed except the preset symbol set table differently from FIG. 10.

In operation S1460, a preview image of the searched symbol set table is displayed.

In operation S1470, a select of whether the searched symbol set table is to be applied is received. In detail, if the displayed preview image expresses an appropriate character, a user may select the displayed preview image and select a symbol set table corresponding to the selected preview image as a symbol set table to be used for a print job. Here, if using of the searched symbol set table is selected by the user, the selected symbol set table may be set to a preset symbol set table.

In operation S1440, a print job is performed with respect to the text document by using the selected symbol set table. In detail, a character of the selected symbol set table corresponding to each byte value of the text document may be searched by using a function of a PCL parser, and a printing job may be performed with respect to the searched character.

As described above, in the image forming method according to the present exemplary embodiment, a symbol set table appropriate for an input text document is searched, and a preview image of the searched symbol set table is provided to a user. Therefore, a wrong character may be prevented from being output from a printing apparatus. The image forming method of FIG. 14 may be performed by an image forming apparatus having the structure of FIG. 1 or image forming apparatuses having other types of structures.

The image forming method of FIG. 14 may be realized as a program including a computer executable algorithm, and the program may be stored and provided on a non-transitory computer readable medium.

The foregoing embodiments and advantages are merely exemplary and are not to be construed as limiting. The present disclosure can be readily applied to other types of apparatuses. Also, the description of the exemplary embodiments is intended to be illustrative, and not to limit the scope of the claims, and many alternatives, modifications, and variations will be apparent to those skilled in the art.

## Claims

1. An image forming apparatus comprising:
a communication interface which receives printing data;
a storage which stores a plurality of symbol set tables;
a searcher which, if the printing data is a text document, searches for a symbol set table to be applied to the text document among the plurality of symbol set tables stored in the storage;
a user interface (UI) which displays a preview image of the searched symbol set table and receives a selection of whether the searched symbol set table is to be applied; and
an image former which performs a print job with respect to the text document by using the selected symbol set table.

2. The image forming apparatus of claim 1, further comprising:
a determiner which determines whether the input printing data is the text document.

3. The image forming apparatus of claim 2, wherein the determiner determines whether the printing data is the text document according to whether the printing data comprises a page description language PDL command.

4. The image forming apparatus of any one of claims 1 through 3, wherein the text document is a document file having extension TXT.

5. The image forming apparatus of any one of claims 1 through 4, wherein the searcher searches the symbol set table to be applied to the text document based on national information set in the image forming apparatus.

6. The image forming apparatus of claim 5, wherein if a plurality of symbol set tables based on the national information are searched, the searcher determines priorities of the plurality of symbol set tables based on a distribution range of a code of the text document.

7. The image forming apparatus of claim 6, wherein the searcher searches the symbol set table to be applied to the text document based on the distribution range of the code of the text document.

8. The image forming apparatus of any one of claims 1 through 7, wherein the searcher searches a symbol set table recently used in the image forming apparatus.

9. The image forming apparatus of any one of claims 1 through 8, wherein the searcher searches a plurality of symbol set tables, and
wherein the UI displays preview images of the plurality of symbol set tables.

10. The image forming apparatus of any one of the preceding claims, wherein, if the printing data is a text document, the UI displays a preview image of the text document to which a preset symbol set table is applied and receives a selection of whether the preset symbol set table is to be applied, and
if the preset symbol set table is not selected, the searcher searches the symbol set table to be applied to the text document among the plurality of symbol set tables stored in the storage, and the UI displays the preview image of the searched symbol set table and is configured to receive the selection of whether the searched symbol set table is to be applied.

11. An image forming method of an image forming apparatus, comprising:
receiving printing data;
if the printing data is a text document, searching for a symbol set table to be applied to the text document among a plurality of pre-stored symbol set tables;
displaying a preview image of the searched symbol set table;
receiving a selection of whether the searched symbol set table is to be applied;
and
performing a print job with respect to the text document by using the selected symbol set table.

12. The image forming method of claim 11, further comprising:
determining whether the printing data is the text document.

13. The image forming method of claim 12, wherein whether the printing data is the text document is determined according to whether the printing data comprises a PDL command.

14. The image forming method of any one of claims 11 through 13, wherein the text document is a document file having extension TXT.

15. The image forming method of any one of claims 11 through 14, wherein a plurality of symbol set tables are searched, and
wherein preview images of the plurality of symbol set tables are displayed.
